# EUROPEAN PATENT SPECIFICATION

(11) **EP 4 318 833 B1**
(45) Date of publication and mention of the grant of the patent: **28.10.2026**
(21) Application number: 22306173.0
(22) Date of filing: 03.08.2022
(51) Int. Cl.: H02G 1/14, H02G 15/064, H02G 15/103, H02G 15/113

(54) **HIGH-VOLTAGE CONNECTOR DEVICE**
HOCHSPANNUNGSVERBINDERVORRICHTUNG
DISPOSITIF DE CONNECTEUR HAUTE TENSION

(43) Date of publication of application: 07.02.2024
(73) Proprietor: CONNECTEURS ELECTRIQUES DEUTSCH, 27000 Evreux CEDEX 09 (FR)
(72) Inventor: CASSAR, Thierry, 27000 Evreux (FR); DELAIRE, Simon, 27000 Evreux (FR); ROMANILLOS, Jacques, 27000 Evreux (FR); VAULLERIN, Baptiste, 27000 Evreux (FR)
(74) Representative: Grünecker Patent- und Rechtsanwälte PartG mbB

(56) References cited:
- US-A- 5 606 149
- US-A- 6 051 792
- US-A1- 2010 038 130
- US-B2- 9 739 804

## Description

### Field of the Invention

The invention relates to connector devices configured for connecting electric cables, particularly, in high-voltage applications. The connector devices may be configured for connecting individual cables with each other or may be connector terminations for connection to some appliances.

### Background of the Invention

Connectors for connecting electrical cables for transporting electrical currents are ubiquitous. Reliable connection of one or more electrical cables to a connector or to one or more other electrical cables, in particular, in harsh environments and high-voltage applications poses demanding problems in the context of a great variety of applications including, for example, aerial and automotive applications.

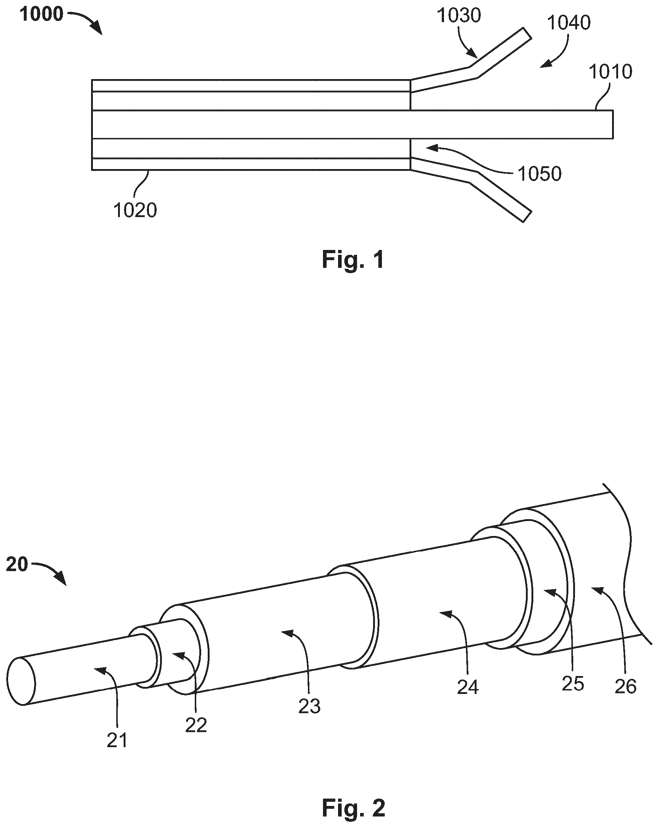

A particular problem arising in the context of connecting electrical cables is the occurrence of the so-called triple point or triple junction. The triple point is a junction between a conductor, a solid dielectric and a gaseous dielectric and there is a high risk that connection failure is caused by such a triple point. A prominent example is illustrated in Figure 1 that shows an electrical cable comprising an inner electrical conductor or conductor strands 1010 insulated by a dielectric material 1020. An electrical conductive braid 1030 is formed on the dielectric material 1020. The presence of air 1040 together with the conductor 1010 and the braid 1030, respectively, and the dielectric material 1020 gives raise to the formation of the triple point 1050. Particularly, in high-voltage applications discharge events may occur at the triple point leading to malfunction. Therefore, triple points have to be avoided in electrical connections, in particular, at connector interfaces.

Consequently, there is a need for a connector device for connecting electrical cables without or substantially without triple points. Particularly, there is a need for such a connector device that can be manufactured at low costs and is suitable for aircraft and automotive applications.

Related background art is known from US 5 606 149 A, US 9 739 804 B2 and US 6 051 792 A.

### Description of the Invention

In order to address the above-mentioned need the invention provides a connector device for connecting at least one electrical cable and comprising a housing, wherein the housing comprises a cover comprising a dielectric cover wall material (for example, comprising or consisting of some plastic material) and a base comprising a dielectric base wall material (for example, comprising or consisting of some plastic material). The cover and the base are configured to be mated to each other (one over the other) before closing of the housing and in a closed state of the housing and to receive an end portion of the at least one electrical cable comprising an electrical conductive portion. Furthermore, the housing of the connector device comprises contacting means for electrically contacting the electrically conductive portion of the at least one electrical cable in the closed state of the housing. The cover and the base are configured such that in the closed state of the housing (of the device ) the housing is substantially gas-free between a) the electrically conductive portion of the at least one electrical cable and the dielectric cover wall material, b) the electrically conductive portion of the at least one electrical cable and the dielectric base wall material, c) the contacting means and the dielectric cover wall material, and d) the contacting means and the dielectric base wall material. Alternatively, the cover and the base are configured such that in the closed state of the housing (of the device), the housing is substantially gas-free between the electrical contacting means and the dielectric cover wall material and the electrical contacting means and the dielectric base wall material.

The connector device may be a connector device configured for connecting one or more electrical cables to one or more other electrical cables or it may be a termination connector for connecting one or more electrical cables to an appliance, for example, a power source.

According to the invention, interfaces between electrically conductive elements within the housing and dielectric material of the housing are substantially gas-free, for example, free of air, and within the connector device all conductive elements can be held on the same electrical potential in the closed state of the housing. Thereby, triple points can advantageously be avoided. The electrically conductive elements are partially part of the at least one electrical cable (the above-mentioned electrically conductive portion of the at least one electrical cable) to be connected by the connector device, for example, to one or more other electrical cables or a connector. A great variety of electrical cables can be connected by the connector device. For example, the electrical cable comprises an inner conductor (inner conductor strands) that is in electrical contact with the contacting means of the housing in the closed state of the housing. For example, the electrical cable comprises as an electrically conductive portion an inner electrically conductive jacket surrounding the inner conductor. For example, a contact (socket or pin contact) may be fastened (for example, crimped) to the inner conductor. In this case, the contacting means may be configured for engaging and thereby electrically contacting the contact of the at least one cable as well as a portion of the inner electrically conductive jacket if present.

Accordingly, in an embodiment, the contacting means is configured for electrically contacting in the closed state of the housing an electrically conductive jacket of the at least one electrical cable surrounding an inner conductor of the at least one electrical cable and the cover and the base are configured such that in the closed state of the housing, the housing is substantially gas-free between the electrically conductive jacket of the at least one electrical cable and the dielectric cover wall material and between the electrically conductive jacket of the at least one electrical cable and the dielectric base wall material. The electrical cable comprising the (inner) electrically conductive jacket surrounding the inner conductor may also comprise a dielectric jacket surrounding the inner electrically conductive jacket, and an electrically conductive braid. Between the dielectric jacket and the braid an outer electrically conductive jacket may be provided and the electrically conductive braid may be surrounded by an insulating jacket. The housing may be configured for electrically contacting the braid at electrically conductive portions of outer surfaces of the housing (i.e. the cover and the base).

According to the invention, the housing further comprises reservoirs of a dielectric grease material provided in the housing and arranged such that in the closed state of the housing the dielectric grease material is quenched into air cavities formed before reaching the closed state of the housing between electrically conductive portions of the at least one electrical cable and the dielectric cover wall material and/or between the electrically conductive portions of the at least one electrical cable and the dielectric base wall material. In other words, it might happen that there are still some air cavities present when mating the cover and the base to each other, in particular, in regions of the housing wherein some dielectric jacket of the otherwise stripped end portion of the at least one electrical cable is present. The grease can be dispersed during the closing process of the housing into that air cavities thereby guaranteeing that substantially no triple points will be left in the housing in the closed state of the housing.

According to the invention, the cover comprises first (cover) finger elements and the base comprises second (base) finger elements arranged such that in the closed state of the housing the first and second finger elements engage each other. Thus, the first and second finger elements are arranged geometrically complementary to each other. Particularly, these finger elements are arranged close to the longitudinal ends of the cover and base and facilitate the mating of the cover and the base to each other as well as the closing. If the dielectric grease material is provided for sealing, the reservoirs of a dielectric grease material may be arranged at least between some of the first finger elements and/or some of the second finger elements and the first finger elements and the second finger elements are arranged such that in in the closed state of the housing at least some of the first and/or second finger elements quench the dielectric grease into the air cavities. By action of the finger elements the dielectric grease is dispersed in the housing in order to fill previously formed air cavities that could otherwise give rise to triple points.

According to the invention, a contacting means is provided for contacting an electrically conductive portion of an electrical cable, for example, an inner conductor and/or an inner electrically conductive jacket surrounding the inner conductor, to be connected by the connector device. The contacting means may comprise an electrically conductive area, for example, an electrically conductive plating or painting, formed on an inner surface of the dielectric cover wall material and the dielectric base wall material. Alternatively, the contacting means may comprise or be an electrically conductive insert arranged between the cover and the base (the dielectric cover wall material and the dielectric base wall material). According to a particular embodiment, the contacting means comprises the electrically conductive insert or sleeve configured for accommodating a tip of an end portion of the at least one electrical cable, in particular, a contact, for example, a pin or socket contact formed, for example, crimped, at the end portion of the at least one electrical cable.

As already mentioned the connector device might be configured for connecting one or more electrical cables to one or more other electrical cables. Thus, according to an embodiment, the housing of the connector device comprises a first (combined cover and base) port for receiving a first electrical cable and a second (combined cover and base) port different from the first port (namely, opposite to the first port in a longitudinal direction of the cover/base/housing) for receiving a second electrical cable different from the first cable for electrically connecting the first electrical cable and the second electrical cable with each other.

Particularly, the cover may comprise an electrically conductive cover portion formed over or in the dielectric cover wall material facing exclusively the outside of the cover and the base may comprise an electrically conductive base portion formed over or in the dielectric base wall material facing exclusively the outside of the base. For example, a lower surface of the base and an upper surface of the cover may partially or completely be made of or comprise an electrically conductive material. A braid of an electrical cable to be connected by the connector device may be connected to both the electrically conductive cover portion and the electrically conductive base portion.

Furthermore, in order to address the above-mentioned need it is provided a system comprising the connector device according to one of the above-described embodiments and an end portion of an electrical cable comprising a conductive portion in electrical contact with the contacting means of the housing of the connector device in a closed state of the housing. The conductive portion may comprise at least one of an inner conductor, an electrically conductive jacket surrounding an inner conductor and a contact fastened to a tip of an inner conductor. Furthermore, the electrical cable may comprise an electrically conductive braid formed over an inner conductor of the electrical cable (for example, formed on an outer electrically conductive jacket that is formed on a dielectric jacket that in course is formed over an inner conductor, for example, on an inner electrically conductive jacket formed on the inner conductor) and electrically connected with the electrically conductive cover and base portions in a closed state of the housing.

According to a particular embodiment, the electrically conductive braid has a notch or flange and the housing comprises a port for receiving the cable, wherein the port comprises a receptacle for mating the notch or flange of the braid. Thereby, after closing the housing a reliable contact between inner conductor/conductive jacket and the contacting means can be realized within the housing, on the hand, and, on the other hand, the braid can be reliably contacted with the housing at electrically conductive portions provided at outside surfaces of the cover and the base of the housing of the connector device.

According to a further embodiment, the system further comprises another end portion of another electrical cable comprising an electrically conductive portion (for example, another contact or another contact and an inner electrically conductive jacket) in electrical contact with the contacting means of the housing of the connector device.

Furthermore, in order to address the above-mentioned need it is provided a method of connecting an electrical cable to a connector device, comprising the steps of providing a cover of a housing of the connector device and a base of the housing of the connector device, wherein the cover comprises a dielectric cover wall material, the base comprises a dielectric base wall material and the housing comprises a contacting means for electrically contacting an electrically conductive portion of the at least one electrical cable (for example, an inner conductor or an inner conductor and an electrically conductive jacket surrounding the inner conductor) and inserting the electrical cable between the cover and the base. The method further comprises closing the housing by pushing the cover and the base towards each other such that in the closed state of the housing it is substantially gas-free between a) the electrically conductive portion of the at least one electrical cable and the dielectric cover wall material, b) the electrically conductive portion of the at least one electrical cable and the dielectric base wall material, c) the contacting means and the dielectric cover wall material, and d) the contacting means and the dielectric base wall material and electrically contacting the contacting means and the electrically conductive portion with each other by the closing of the housing. Alternatively, the housing is closed by pushing the cover and the base towards each other such that in the closed state of the housing it is substantially gas-free between the contacting means and the dielectric cover wall material and the contacting means and the dielectric base wall material.

The connector device used in this method is the connector of the invention and may be the connector device according to any of the above-described embodiments.

In particular, the housing further comprises a dielectric grease material and, the method comprises quenching/dispersing by the closing of the housing the dielectric grease material into air cavities that are formed between the electrically conductive portion of the at least one electrical cable and the dielectric cover wall material and/or between the electrically conductive portion of the at least one electrical cable and the dielectric base wall before the complete closing of the housing.

According to an embodiment of the inventive method, the electrical cable comprises an electrically conductive braid formed over an inner conductor, for example, over an electrically conductive jacket surrounding the inner conductor, the cover comprises a first electrically conductive portion formed over or in the dielectric cover wall material facing exclusively the outside of the cover, the base comprises a second electrically conductive portion formed over or in the dielectric base wall material facing exclusively the outside of the base and the method further comprises the step of contacting the electrically conductive braid with the first and second electrically conductive portions after or during the closing of the housing.

According to an embodiment, the at least one electrical cable comprises a contact and the method further comprises inserting another electrical cable comprising another contact between the cover and the base of the housing and contacting the contact of the at least one cable with the other contact of the other electrical cable by the closing of the housing.

Further features and exemplary embodiments as well as advantages of the present disclosure will be explained in detail with respect to the drawings. It is understood that the present disclosure should not be construed as being limited by the description of the following embodiments. It should furthermore be understood that some or all of the features described in the following may also be combined in alternative ways.
- Figure 1: illustrates the triple point problem to be addressed in the present application.
- Figure 2: illustrates an example for an electrical cable that can be reliably connected by means of an electrical connector device presented herein.
- Figures 3a and 3b: illustrate a cover and a base of a housing of a connector device according to an embodiment in a mated open and closed state, respectively, for connecting two electrical cables.
- Figure 4: illustrates a termination connector device for connecting electrical cables to a connector.
- Figures 5a and 5b: show details of a cover and a base, respectively, of a housing of a connector device according to an embodiment of the present invention.
- Figure 6: illustrates in a side view a configuration wherein two cables are inserted in the cover and base shown in Figures 5a and 5b.
- Figures 7a and 7b: illustrate details of the configuration shown in Figure 6 related to contact latching.
- Figure 8: shows an electrical insert or sleeve for the housing of a connector device according to an embodiment.
- Figure 9: illustrates a configuration of a housing of a connector device according to an embodiment wherein two electrical cables are inserted in a cover and a base comprising the electrical insert shown in Figure 8.
- Figure 10: illustrates electric contacting within the housing shown in Figure 6 in a closed state.
- Figure 11: illustrates electric contacting within the housing shown in Figure 9 in a closed state.
- Figure 12: shows an exemplary embodiment of a connector device with a housing similar to the one shown in Figure 6 in a closed state.
- Figures 13a and 13b: illustrates reservoirs of grease provided for the cover and the base of a housing of a connector device according to an embodiment.
- Figures 14a and 14b: illustrates replacement of air by means of grease provided by the reservoirs of grease shown in Figure 13.

The present invention provides a connector device configured for connecting one or more electrical cables. The connector device comprises a housing designed to substantially avoid the occurrence of triple points. Particularly, air is removed from interfaces between conductive parts of cables to be connected by the connector device and insulating parts of the connector device in a closed state of a housing of the connector device.

A typical example of an electrical cable that can suitably be connected by means of a connector device provided herein is shown in Figure 2. The electrical cable 20 shown in Figure 2 has an inner connector or connector strands 21 surrounded by a (first, inner) electrically conductive jacket 22 insulated by a dielectric jacket 23. Above the dielectric jacket 23 another (second, outer) electrically conductive jacket 24 is formed. An electrically conductive braid 25 is formed above the other electrically conductive jacket 24 and it is covered by an outer insulating jacket 26. The configuration shown in Figure 2 allows to avoid triple points within the electrical cable 20. The first (inner) conductive jacket 22 might be not present but in the following description it is assumed that it is present for illustrative purposes. Similarly, the second (outer) conductive jacket 24 may not be present but in the following description it is assumed that it is present for illustrative purposes.

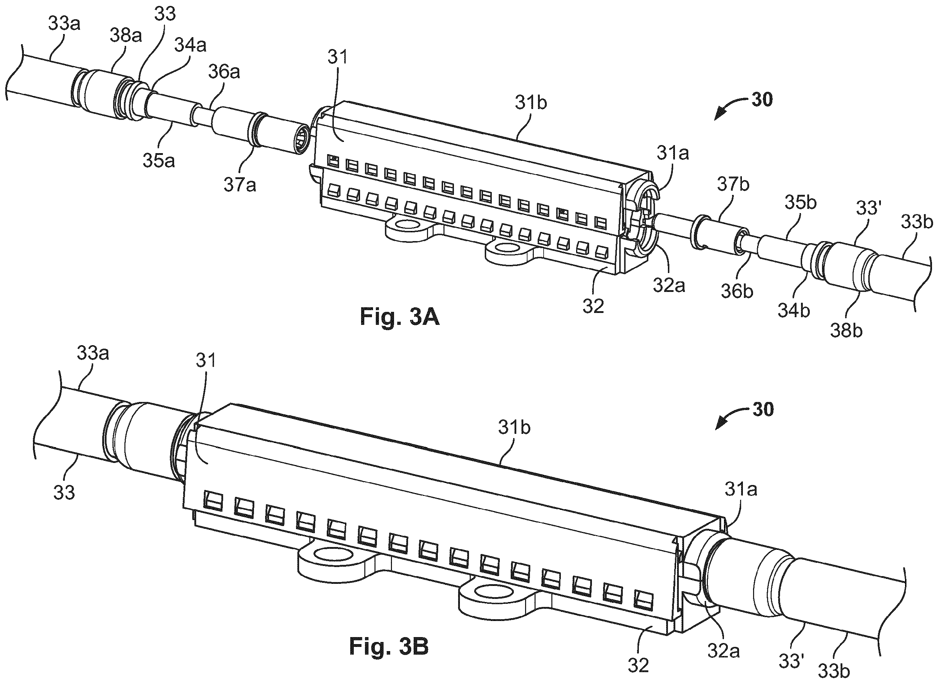

Electrical connector devices provided herein can be configured for connecting one or more electrical cables to one or more other electrical cables or they can be configured as termination connectors, for example. An exemplary jiffy junction connector device 30 is illustrated in Figures 3a and 3b. Figure 3a shows a cover (upper part) 31 of a housing of the connector device 30 and a base (lower part) 32 of the housing of the connector device 30 in an open state before insertion of the electrical cables 33 and 33' and Figure 3b shows the cover 31 and the base 32 in a closed state. The housing is closed by pushing the cover 31 and the base 32 to each other. The cover 31 comprises a cover port 31a and the base 32 comprises a base port 32a for receiving electrical cables to be connected with each other by the connector device 30. The cover port 31a, the base port 32a, at least a portion 31b of the upper surface of the cover 31 and at least a portion of the lower surface of the base 32 are electrically conductive for electrically contacting braids 38a, 38b of the cables 33 and 33'.

In the example shown in Figure 3a the cable 33 comprising an insulating jacket 33a, a first conductive jacket 34a, a dielectric jacket 35a, a second conductive jacket 36a, a braid 38a and a socket contact 37a and the cable 33' comprising an insulating jacket 33b, a first conductive jacket 34b, a dielectric jacket 35b, a second conductive jacket 36b, a braid 38b and a pin contact 37b are to be connected with each other by the connector device 30. The socket contact 37a may be crimped to a tip of the electrical cable 33 and the pin contact 37b may be crimped to a tip of the electrical cable 33'. The braid 38a may comprise a notch or flange 38an and the braid 38b may comprise a notch or flange 38bn and the ports 31a, 32a may comprise receptacles for mating the notches or flanges 38an, 38bn of the braids 38a, 38b.

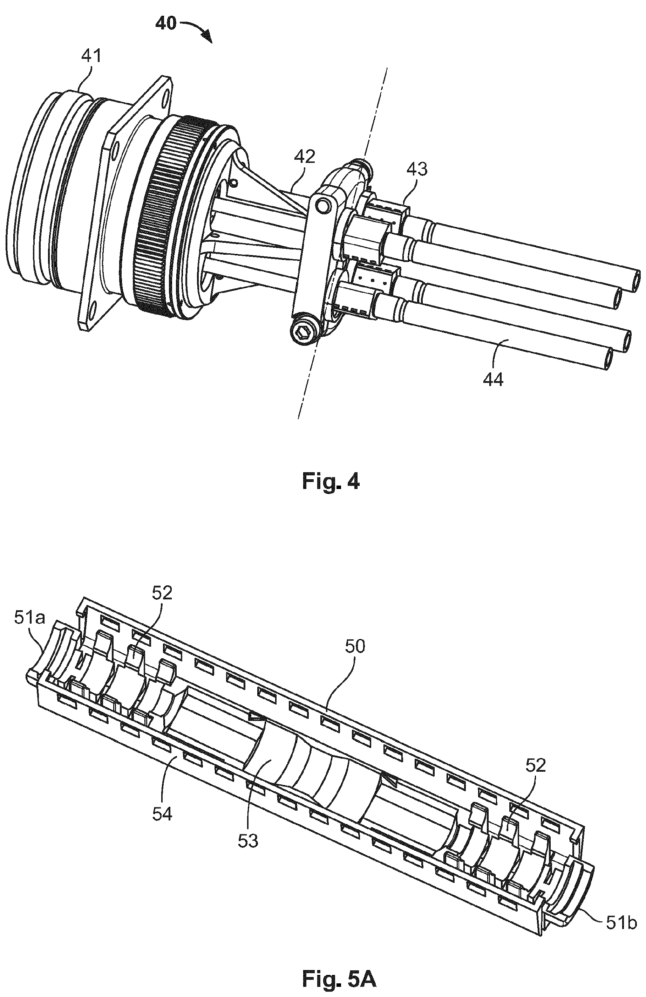

Figure 4 illustrates a termination connector 40 comprising a backshell on a receptacle 41. The termination connector 40 may provide electrical contact to some appliance, for example, a power source, via conductors/cables 42. The termination connector 40 comprises housings 43 for connecting the backshell conductors/cables 42 with electrical cables 44.

In the following, details of a connector device similar to the connector device 30 shown in Figures 3a and 3b and a procedure of connecting two electrical cables with each other by means of such a connector device are described for illustrative purposes.

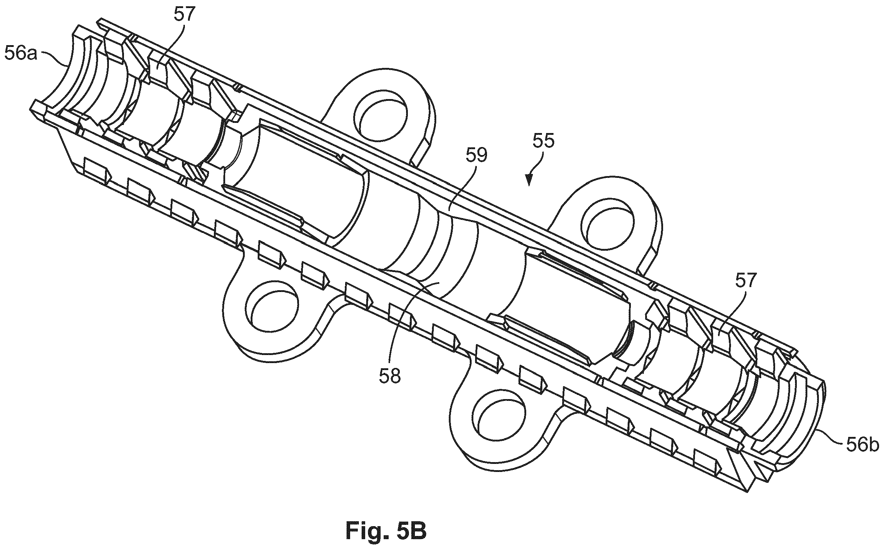

Details of a cover and a base of a particular embodiment of an inventive connector device are shown in Figures 5a and 5b. The cover 50 shown in Figure 5a comprises two electrically conductive cover ports 51a and 51b for contacting braids of electrical cables (cf. also Figure 3b). Further, the cover 50 comprises cover finger elements 52 for mechanically interacting with the base 55 shown in Figure 5b. Furthermore, the cover 50 comprises an electrically conductive cover portion 53 (for example, some electrically conductive painting or plating) formed on an inner surface a dielectric cover wall material 54 of the cover 50. The electrically conductive cover portion 53 is configured for electrically contacting conductive portions of electrical cables, for example, (inner) electrically conductive jackets surrounding a central inner conductor or strands, to be connected by the connector device comprising the cover 50. Corresponding to the cover 50 the base 55 shown in Figure 5b comprises two electrically conductive base ports 56a and 56b for contacting braids of electrical cables. Further, the base 55 comprises base finger elements 57 for mechanically interacting with the finger elements 52 of the cover 50. Furthermore, the base 55 comprises an electrically conductive base portion 58 (for example, some electrically conductive painting or plating) formed on an inner surface a dielectric base wall material 59 of the base 55. It is noted that according to other embodiments rather than the electrically conductive portions 53 and 58 some electrically conductive insert or sleeve for accommodating the end portions of the cables 33 and 33' may be provided.

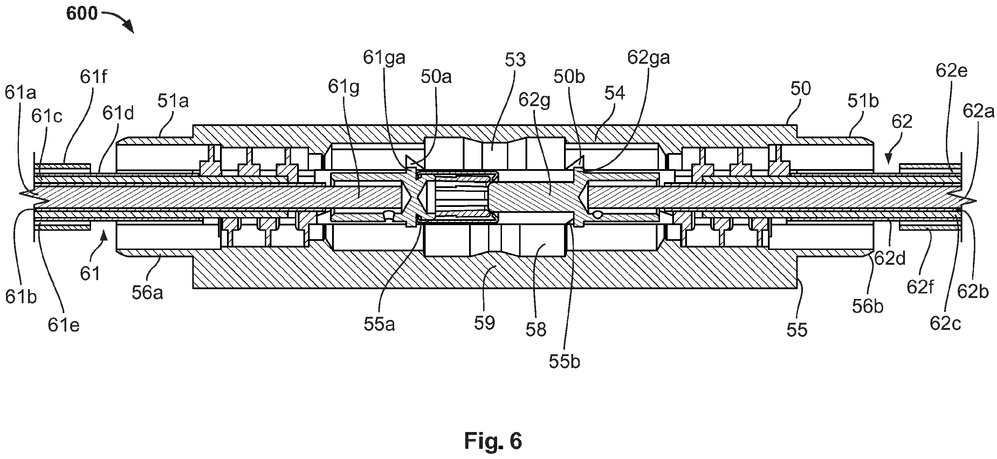

Figure 6 shows a configuration of a connector device 600 in which two electrical cables 61 and 62 are inserted into the cover 50 and base 55 illustrated in Figures 5a and 5b that are already mated to each other but yet not closed to each other. The cable 61 comprises an inner conductor or conductor strands 61a, a (first, inner) conductive jacket 61b, a dielectric jacket 61c, another (a second, outer) conductive jacket 61d, a conductive braid 61e and an insulating jacket 61f. Further, a socket contact 61g is fastened to a tip of the inner conductor 61a. The cable 62 comprises an inner conductor or conductor strands 62a, a (first, inner) conductive jacket 62b, a dielectric jacket 62c, another (a second, outer) conductive jacket 62d, a conductive braid 62e and an insulating jacket 62f. Further, a pin contact 62g is fastened to a tip of the inner conductor 62a. The cables 61 and 62 are inserted into the cover 50 and 55 until a collar 61ga of the socket contact 61g is latched with a cover latching member 50a comprised by the cover 50 and a base latching member 55a comprised by the base 55 and latching of a collar 62g of the pin contact 62g with another cover latching member 50b comprised by the cover 50 and another base latching member 55b comprised by the base 55. In this state, according to the example shown in Figure 6, the socket contact 61g and the pin contact 62g may be in contact with each other but the pin contact 62g is not yet inserted into the socket contact 61g (this will only result from closing the cover 50 to the base 55 in a later procedural step of the connection procedure). This insertion will only be achieved when closing the cover 50 to the base 55.

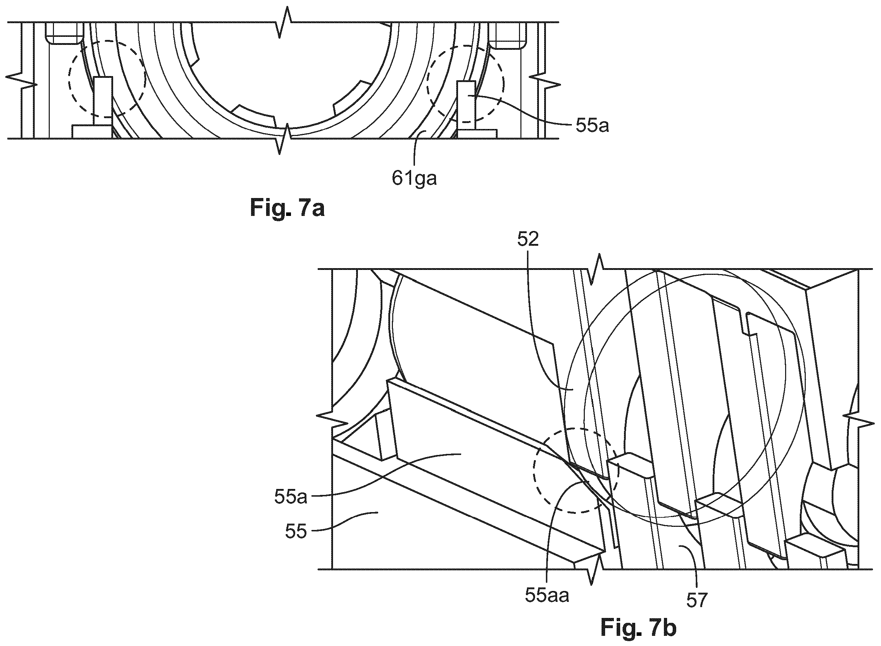

Details related to the latching of the contacts to the latching members are shown in Figures 7a and 7b. The collar 61ga of the socket contact 61g abuts the base latching member 55a of the base 55. The base latching member 55a may comprise a chamfered edge 55aa for ease of operation. As can be seen in Figure 7b the finger elements 52 comprised by the cover 50 and the finger elements 57 comprised by the base 55 may be already in contact with each other but in the state shown in Figures 6, 7a and 7b they are not yet interdigitated with each other (this will only result from closing the cover 50 to the base 55 in a later procedural step of the connection procedure).

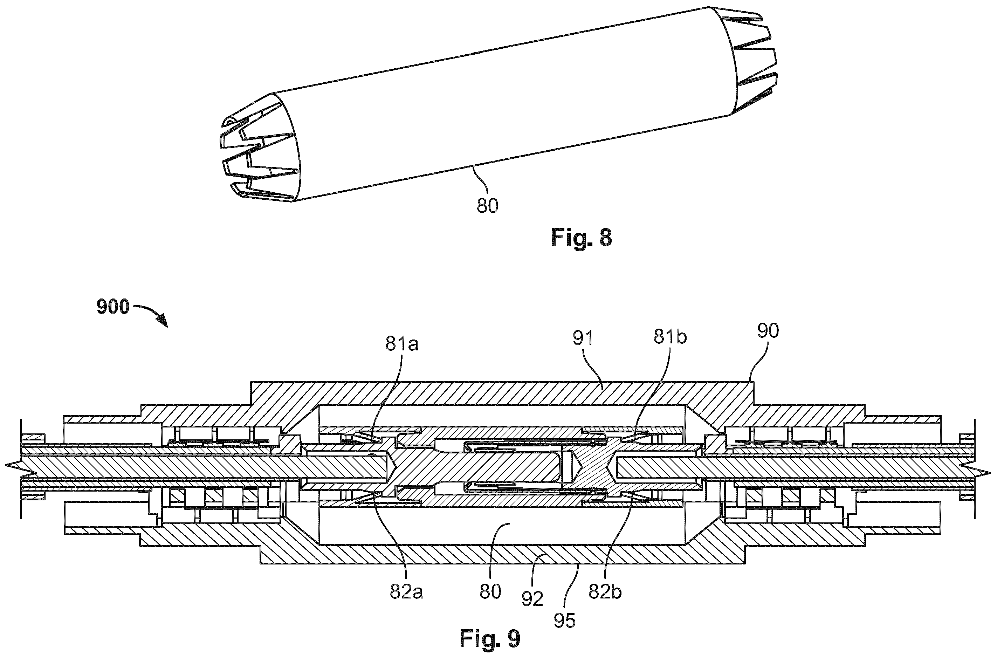

As already noted according to another embodiment an electrically conductive insert can be provided rather than the electrically conductive portions 53 and 58. Figure 8 shows an example of such a conductive insert (sleeve) 80 configured for accommodating the end portions of electrical cables to be connected with each other. The conductive insert 80 may be formed integrally as one piece and comprises ports for the insertion of end portions of electrical cables.

Figure 9 shows a configuration of a connector device 900 making use of the insert 80 shown in Figure 8. The same electrical cables as described with reference to Figures 2 and 6 can be connected with each other by means of the connector device shown in Figure 9. The cover 90 of the housing of the connector device comprises a dielectric cover wall material 91 and the base 95 of the housing comprises a dielectric base wall material 92. An outer surface of the cover 90 comprises an electrically conductive portion for electrically contacting the braids of the cables. Electrically contacting the electrically conductive jackets of the electrically cables is provide by the insert 80. Moreover, latching of the collars of the pin and socket contacts is provided by latching members 81a, 81b, 82a and 82b formed inside of the electrically conductive insert 80.

In both the configuration shown in Figure 6 and the configuration shown in Figure 9 the housing is closed by pushing the cover 50, 90 and the base 55, 95 to each other. The housings are configured such that by the closing procedure electrically conductive portions within the housing (being part of the housing and the electrical cables, respectively) are in contact with each other and, thus, at the same electrical potential. There is substantially no air between the electrically conductive parts and the dielectric wall material of the cover and base.

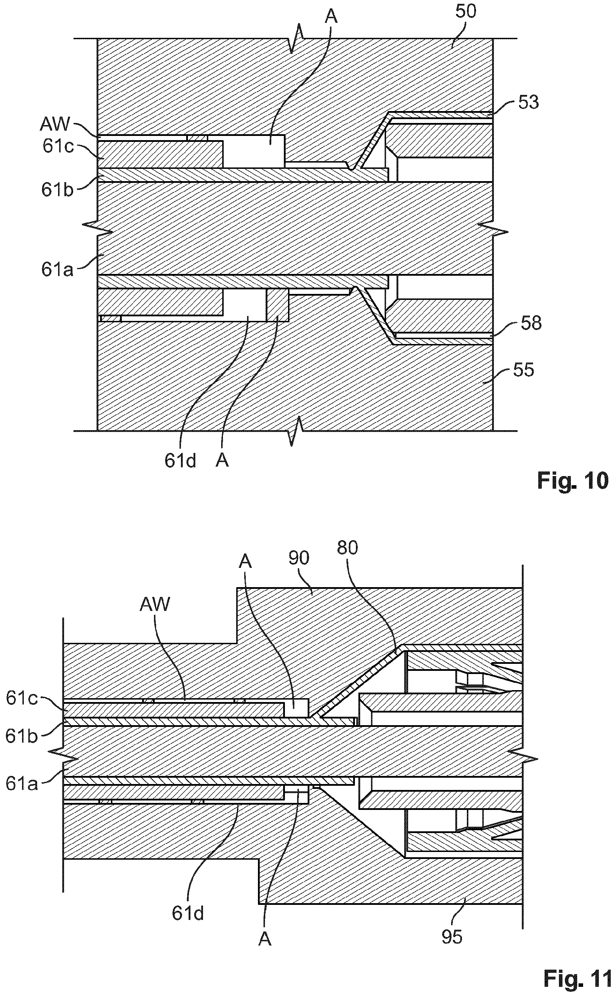

Figure 10 shows the electrical contacting within the closed housing for the configuration illustrated in Figure 6 and Figure 11 shows the electrical contacting within the closed housing for the configuration illustrated in Figure 9. As shown in Figure 10 the conductive jacket 61b in the closed state of the housing is in contact (engaged) with the electrically conducting portion 53 of the cover 50 and the electrically conducting portion 58 of the base 55 with no air between the electric potential and the dielectric materials of the cover 50 and the base 55. Similarly, Figure 11 shows the conductive jacket 61b in the closed state of the housing being in contact (engaged) with the electrically conducting insert 80 with no air between the electric potential and the dielectric materials of the cover 90 and the base 95.

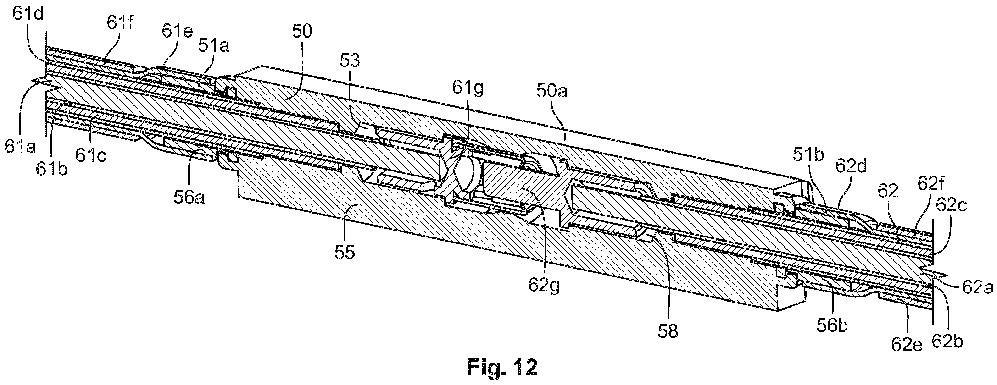

Figure 12 shows an exemplary embodiment of a connector device with a housing similar to the one shown in Figure 6 in a closed state. In the closed state the pin contact 62g is at least partially or completely inserted into the socket contact 61g. All of the inner conductor 61a, the first conductive jacket 61b, the socket contact 61g, the inner conductor 62a, the first conductive jacket 62b, the socket contact 62g and the conductive portion 53 of the cover 50 as well as the conductive portion 58 of the base 55 are at the same first electrical potential in the closed state of the housing. On the other hand, all of the braid 61e, the braid 62e, the port 51a, the port 51b, the port 56a, the port 56b, the outer conductive portion 50a of the cover and the outer conductive portion (not shown in Figure 11) of the base 55 are at the same second electrical potential different from the first electrical potential with substantially no air present between all of the first and second electrical potentials and dielectric materials such that triple points can be avoided.

It is noted that all of the above-described embodiments also work for connecting electrical cables that do not comprise first (inner) conductive jackets surrounding inner conductors (strands). In this case, the inner conductors and the conductive inner portions of the covers and bases are electrically contacted with each other (and, thus, brought to the same electrical potential) via the pin and socket contacts only.

However, even when designing the cover and base of a connector to avoid air between electrical potentials and dielectric materials still some cavities may be built wherein some air might be trapped and fluid connection between air and potentials might arise. This can be seen, for example, in the configurations shown in Figures 10 and 11. Some air might be trapped in an air cavity A between the conductive jacket 61b (or if not present the inner conductor 61a), the dielectric jacket 61c and the (dielectric material of the) cover 50 as well as between the conductive jacket 61b (or if not present the inner conductor 61a), the dielectric jacket 61c and the (dielectric material of the) base 55. This air might be in fluid communication directly with the second conductive jacket 61d or via an airway AW unintentionally formed between the dielectric jacket 61c and the dielectric wall material of the cover and/or the base thereby possible giving rise to the formation of a triple point. In order to avoid the formation of triple points in that manner, according to embodiments, some grease material is provided for the cover 50 and/or base 55 in the configuration shown in Figures 6, 10, 11 and 12. It goes without saying that such a grease material can be provided for any configuration provided herein. Reservoirs of grease can be arranged at suitable position in the cover and/or base of the housing and can be suitably distributed/dispensed during the closing of the housing in order to avoid air cavities like the air cavities A shown in Figures 10 and 11.

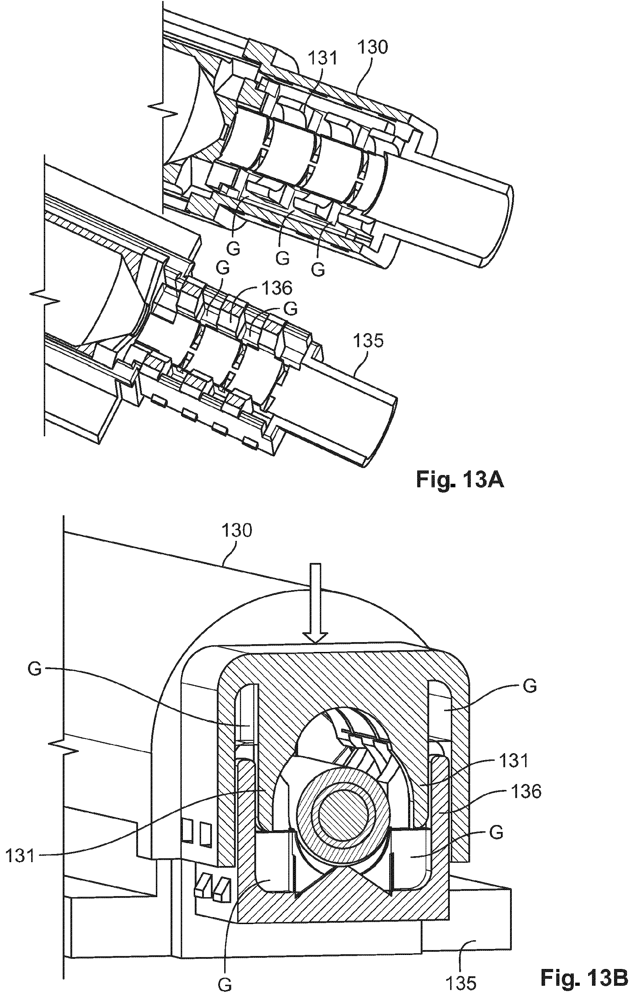

Figure 13a shows a cover 130 of a housing of a connector device according to an embodiment and, correspondingly, a base 135 of a housing of a connector device according to an embodiment. The cover 130 comprises finger elements 131 and the base 135 also comprises complementary finger elements 136. Reservoirs of grease G are arranged between the finger elements 131 and 136, respectively. Figure 13b shows a housing comprising the cover 130 and base 135 shown in Figure 13a in a mated but not yet closed state. When the housing is closed by pushing the cover 130 towards the base 135 (indicated by the arrow in Figure 13b) the respective finger elements 131 and 136 are pushed onto the respective reservoirs of grease G.

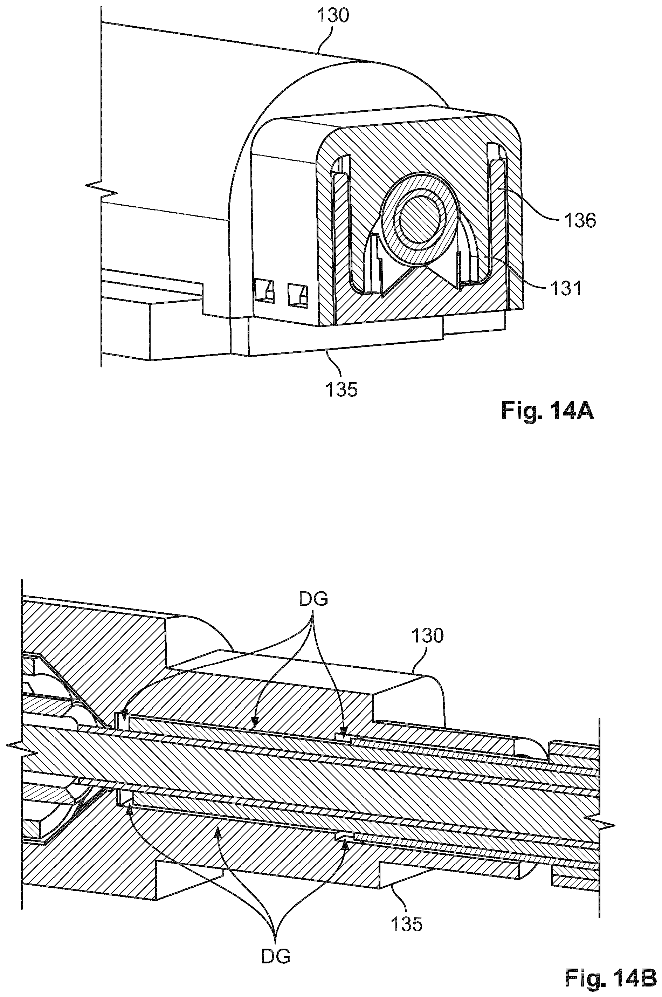

When the housing is closed the grease is pushed out of the reservoirs shown in Figures 13a and 13b and distributed into air cavities that might be present as it is illustrated in Figures 14a and 14b. The dispensed grease DG pushes out air between the dielectric material of the housing and the conductive portions of the electrical cable. Particularly, by the action of the finger elements 131 and 136 on the reservoirs G the air cavities A formed between electrical potentials and dielectric materials of the cover and base as shown in Figures 10 and 11 can be filled by grease in the closed state of the housing (see Figure 14b).

All of the above-described embodiments allow for a quick and easy connection of electrical cables substantially without significantly causing the formation of triple points.

### List of reference numbers:

- 20, 33, 33', 44, 61, 62, 1000: electrical cable
- 21, 61a, 62a, 1010: inner conductor
- 22, 36a, 36b, 61b, 62b: inner conductive jacket
- 23, 35a, 35b, 61c, 62c: dielectric jacket
- 24, 34a, 34b, 61d, 62d: second conductive jacket
- 25, 1030, 61e, 62e: braid
- 26, 61f, 62f: outer insulating jacket
- 30, 600, 900: connector device
- 31, 50, 90, 130: cover
- 31a, 51a, 51b: cover port
- 31b: electrically conductive portion
- 32a, 56a, 56b: base port
- 32, 55, 95, 135: base
- 37a, 61g: socket contact
- 37b, 62g: pin contact
- 38an, 38bn: braid notches or flanges
- 40: termination connector
- 41: backshell
- 42: backshell cables
- 50a, 50b: cover latching member
- 52, 131: cover finger elements
- 53: conductive cover portion
- 54, 91: dielectric cover wall material
- 55a, 55b: base latching member
- 55aa: chamfered edge of base latching member
- 57, 136: base finger elements
- 58: conductive base portion
- 59, 92: dielectric base wall material
- 61ga: socket contact collar
- 62ga: pin contact collar
- 80: conductive insert
- 81a, 81b, 82a,82b: latching member
- 1040: air
- 1050: triple point
- A: air cavity
- AW: airway
- G: reservoir of grease
- DG: dispensed grease

## Claims

1. Connector device (30, 600, 900) for connecting at least one electrical cable (20, 33, 33', 44, 61, 62) and comprising a housing, wherein the housing comprises
a cover (31, 50, 90, 130) comprising a dielectric cover wall material (54, 91) and a base (32, 55, 95, 135) comprising a dielectric base wall material (59, 92), the cover (31, 50, 90, 130) and the base (32, 55, 95, 135) being configured to be mated to each other in a closed state of the housing and to receive an end portion of the at least one electrical cable (20, 33, 33', 44, 61, 62) comprising an electrically conductive portion;
and a contacting means (53, 80) for electrically contacting the electrically conductive portion of the at least one electrical cable (20, 33, 33', 44, 61, 62) in the closed state of the housing;
and wherein the cover (31, 50, 90, 130) and the base (32, 55, 95, 135) are configured such that in the closed state of the housing the housing is substantially gas-free between a) the electrically conductive portion of the at least one electrical cable (20, 33, 33', 44, 61, 62) and the dielectric cover wall material (54, 91), b) the electrically conductive portion of the at least one electrical cable (20, 33, 33', 44, 61, 62) and the dielectric base wall material (59, 92), c) the contacting means (53, 80) and the dielectric cover wall material (54, 91), and d) the contacting means (53, 80) and the dielectric base wall material (59, 92),
wherein the housing further comprises reservoirs (G) of a dielectric grease material provided in the housing and arranged such that in the closed state of the housing the dielectric grease material is quenched into air cavities (A) formed before reaching the closed state of the housing between electrically conductive portions of the at least one electrical cable (20, 33, 33', 44, 61, 62) and the dielectric cover wall material (54, 91) and/or between the electrically conductive portions of the at least one electrical cable (20, 33, 33', 44, 61, 62) and the dielectric base wall material (59, 92),
wherein the cover (31, 50, 90, 130) comprises first finger elements (52, 131) and the base (32, 55, 95, 135) comprises second finger elements (57, 136) arranged such that in in the closed state of the housing the first and second finger elements (57, 136) engage each other, and
wherein the reservoirs (G) of the dielectric grease material are arranged at least between some of the first finger elements (52, 131) and/or some of the second finger elements (57, 136) and the first finger elements (52, 131) and the second finger elements (57, 136) are arranged such that in in the closed state of the housing at least some of the first finger elements (52, 131) and/or second finger elements (57, 136) quench the dielectric grease into the air cavities (A).

2. The connector device (30, 600, 900) according to claim 1, wherein the contacting means (53, 80) is configured for engaging a contact (37a, 37b, 61g, 62g) of the at least one electrical cable (20, 33, 33', 44, 61, 62).

3. The connector device (30, 600, 900) according to claim 1 or 2, wherein
the contacting means (53, 80) is configured for electrically contacting in the closed state of the housing an electrically conductive jacket (22, 36a, 36b, 61b, 62b) of the at least one electrical cable (20, 33, 33', 44, 61, 62) surrounding an inner conductor (21, 61a, 62) of the at least one electrical cable (20, 33, 33', 44, 61, 62); and
the cover (31, 50, 90, 130) and the base (32, 55, 95, 135) are configured such that in the closed state of the housing the housing is substantially gas-free between the electrically conductive jacket (22, 36a, 36b, 61b, 62b) of the at least one electrical cable (20, 33, 33', 44, 61, 62) and the dielectric cover wall material (54, 91) and between the electrically conductive jacket (22, 36a, 36b, 61b, 62b) of the at least one electrical cable (20, 33, 33', 44, 61, 62) and the dielectric base wall material (59, 92).

4. The connector device (30, 600, 900) according to one of the preceding claims, wherein the contacting means (53, 80) comprises or is a) an electrically conductive area, for example, an electrically conductive plating or painting (53), formed on an inner surface of the dielectric cover wall material (54, 91) and the dielectric base wall material (59, 92) or b) an electrically conductive insert (80) arranged between the cover (31, 50, 90, 130) and the base (32, 55, 95, 135).

5. The connector device (30, 600, 900) according to claim 4, wherein the contacting means (53, 80) comprises the electrically conductive insert or a sleeve (80) configured for accommodating a tip of the end portion of the at least one electrical cable (20, 33, 33', 44, 61, 62), in particular, a contact (37a, 37b, 61g, 62g) formed at the end portion.

6. The connector device (30, 600, 900) according to one of the preceding claims, wherein the housing comprises a first port (31a, 32a, 51a, 56a) for receiving a first electrical cable (20, 33, 33', 44, 61, 62) and a second port different (51b, 56b) from the first port (31a, 32a, 51a, 56a) for receiving a second electrical cable (20, 33, 33', 44, 61, 62) different from the first electrical cable (20, 33, 33', 44, 61, 62).

7. The connector device (30, 600, 900) according to one of the preceding claims, wherein
the cover (31, 50, 90, 130) comprises an electrically conductive cover portion (31b) formed over or in the dielectric cover wall material (54, 91) facing exclusively the outside of the cover (31, 50, 90, 130); and
the base (32, 55, 95, 135) comprises an electrically conductive base portion formed over or in the dielectric base wall material (59, 92) facing exclusively the outside of the base (32, 55, 95, 135).

8. System comprising the connector device (30, 600, 900) according to one of the preceding claims and an end portion of an electrical cable (20, 33, 33', 44, 61, 62) comprising a conductive portion in electrical contact with the contacting means (53, 80) of the housing of the connector device (30, 600, 900) in a closed state of the housing.

9. The system according to claim 8, wherein the conductive portion comprises at least one of an inner conductor (21, 61a, 62), an electrically conductive jacket (22, 36a, 36b, 61b, 62b) surrounding an inner conductor (21, 61a, 62) and a contact (37a, 37b, 61g, 62g) fastened to a tip of an inner conductor (21, 61a, 62).

10. The system according to claim 8 or 9 in combination with claim 7, wherein
the electrical cable (20, 33, 33', 44, 61, 62) comprises an electrically conductive braid (25, 1030, 61e, 62e) formed over an inner conductor (21, 61a, 62) of the electrical cable (20, 33, 33', 44, 61, 62) and electrically connected with the electrically conductive cover portion (31b) and the electrically conductive base portion in a closed state of the housing.

11. The system according to claim 10, wherein the electrically conductive braid (25, 1030, 61e, 62e) has a notch or flange (38an, 38bn) and the housing comprises a port (31a, 32a, 51a, 56a, 51b, 56b) for receiving the cable, wherein the port (31a, 32a, 51a, 56a, 51b, 56b) comprises a receptacle for mating the notch or flange (38an, 38bn) of the electrically conductive braid (25, 1030, 61e, 62e).

12. Method of connecting an electrical cable (20, 33, 33', 44, 61, 62) to a connector device (30, 600, 900) according to one of claims 1 to 7, comprising the steps of
providing a cover (31, 50, 90, 130) of a housing of the connector device (30, 600, 900) and a base (32, 55, 95, 135) of the housing of the connector device (30, 600, 900), wherein the cover (31, 50, 90, 130) comprises a dielectric cover wall material (54, 91), the base (32, 55, 95, 135) comprises a dielectric base wall material (59, 92) and the housing comprises a contacting means (53, 80) for electrically contacting an electrically conductive portion of the at least one electrical cable (20, 33, 33', 44, 61, 62);
inserting the electrical cable (20, 33, 33', 44, 61, 62) between the cover (31, 50, 90, 130) and the base (32, 55, 95, 135);
closing the housing by pushing the cover (31, 50, 90, 130) and the base (32, 55, 95, 135) towards each other such that in the closed state of the housing the housing is substantially gas-free between a) the electrically conductive portion of the at least one electrical cable (20, 33, 33', 44, 61, 62) and the dielectric cover wall material (54, 91), b) the electrically conductive portion of the at least one electrical cable (20, 33, 33', 44, 61, 62) and the dielectric base wall material (59, 92), c) the contacting means (53, 80) and the dielectric cover wall material (54, 91), and d) the contacting means (53, 80) and the dielectric base wall material (59, 92); and
electrically contacting the contacting means (53, 80) and the electrically conductive portion with each other by the closing of the housing.

## Patentansprüche

1. Verbindervorrichtung (30, 600, 900) zum Verbinden mindestens eines elektrischen Kabels (20, 33, 33', 44, 61, 62) und umfassend ein Gehäuse, wobei das Gehäuse
eine Abdeckung (31, 50, 90, 130), die ein dielektrisches Abdeckungswandmaterial (54, 91) umfasst, und eine Basis (32, 55, 95, 135), die ein dielektrisches Basiswandmaterial (59, 92) umfasst, umfasst, wobei die Abdeckung (31, 50, 90, 130) und die Basis (32, 55, 95, 135) dazu ausgebildet sind, in einem geschlossenen Zustand des Gehäuses miteinander zusammengefügt zu sein und einen Endabschnitt des mindestens einen elektrischen Kabels (20, 33, 33', 44, 61, 62) aufzunehmen, der einen elektrisch leitfähigen Abschnitt umfasst;
und Kontaktierungsmittel (53, 80) umfasst, zum elektrischen Kontaktieren des elektrisch leitfähigen Abschnitts des mindestens einen elektrischen Kabels (20, 33, 33', 44, 61, 62) im geschlossenen Zustand des Gehäuses,
und wobei die Abdeckung (31, 50, 90, 130) und die Basis (32, 55, 95, 135) derart ausgebildet sind, dass im geschlossenen Zustand des Gehäuses das Gehäuse im Wesentlichen gasfrei ist zwischen
a) dem elektrisch leitfähigen Abschnitt des mindestens einen elektrischen Kabels (20, 33, 33', 44, 61, 62) und dem dielektrischen Abdeckungswandmaterial (54, 91),
b) dem elektrisch leitfähigen Abschnitt des mindestens einen elektrischen Kabels (20, 33, 33', 44, 61, 62) und dem dielektrischen Basiswandmaterial (59, 92),
c) den Kontaktierungsmitteln (53, 80) und dem dielektrischen Abdeckungswandmaterial (54, 91), und
d) den Kontaktierungsmitteln (53, 80) und dem dielektrischen Basiswandmaterial (59, 92),
wobei das Gehäuse ferner Reservoirs eines dielektrischen Fettmaterials umfasst, die im Gehäuse vorgesehen und derart angeordnet sind, dass im geschlossenen Zustand des Gehäuses das dielektrische Fettmaterial in Lufthohlräume gelöscht wird, die zum Erreichen des geschlossenen Zustands des Gehäuses zwischen elektrisch leitfähigen Abschnitten des mindestens einen elektrischen Kabels (20, 33, 33', 44, 61, 62) und dem dielektrischen Abdeckungswandmaterial (54, 91) und/oder zwischen den elektrisch leitfähigen Abschnitten des mindestens einen elektrischen Kabels (20, 33, 33', 44, 61, 62) und dem dielektrischen Basiswandmaterial (59, 92) ausgebildet werden,
wobei die Abdeckung (31, 50, 90, 130) erste Fingerelemente (52, 131) umfasst und die Basis (32, 55, 95, 135) zweite Fingerelemente (57, 136) umfasst, die derart angeordnet sind, dass im geschlossenen Zustand des Gehäuses die ersten und zweiten Fingerelemente (57, 136) ineinandergreifen, und
wobei die Reservoirs des dielektrischen Fettmaterials zumindest zwischen einigen der ersten Fingerelemente (52, 131) und/oder einigen der zweiten Fingerelemente (57, 136) angeordnet sind und die ersten Fingerelemente (52, 131) und die zweiten Fingerelemente (57, 136) derart angeordnet sind, dass im geschlossenen Zustand des Gehäuses zumindest einige der ersten Fingerelemente (52, 131) und/oder zweiten Fingerelemente (57, 136) das dielektrische Fett in die Lufthohlräume löschen.

2. Verbindervorrichtung (30, 600, 900) nach Anspruch 1, wobei die Kontaktierungsmittel (53, 80) zum Eingreifen mit einem Kontakt (37a, 37b, 61g, 62g) des mindestens einen elektrischen Kabels (20, 33, 33', 44, 61, 62) ausgebildet sind.

3. Verbindervorrichtung (30, 600, 900) nach Anspruch 1 oder 2, wobei die Kontaktierungsmittel (53, 80) zum elektrischen Kontaktieren, im geschlossenen Zustand des Gehäuses, eines elektrisch leitfähigen Mantels (22, 36a, 36b, 61b, 62b) des mindestens einen elektrischen Kabels (20, 33, 33', 44, 61, 62), der einen Innenleiter (21, 61a, 62a) des mindestens einen elektrischen Kabels (20, 33, 33', 44, 61, 62) umgibt, ausgebildet sind; und
wobei die Abdeckung (31, 50, 90, 130) und die Basis (32, 55, 95, 135) derart ausgebildet sind, dass im geschlossenen Zustand des Gehäuses das Gehäuse im Wesentlichen gasfrei ist zwischen dem elektrisch leitfähigen Mantel (22, 36a, 36b, 61b, 62b) des mindestens einen elektrischen Kabels (20, 33, 33', 44, 61, 62) und dem dielektrischen Abdeckungswandmaterial (54, 91) und zwischen dem elektrisch leitfähigen Mantel (22, 36a, 36b, 61b, 62b) des mindestens einen elektrischen Kabels (20, 33, 33', 44, 61, 62) und dem dielektrischen Basiswandmaterial (59, 92).

4. Verbindervorrichtung (30, 600, 900) nach einem der vorhergehenden Ansprüche, wobei die Kontaktierungsmittel (53, 80) einen elektrisch leitfähigen Bereich, beispielsweise eine elektrisch leitfähige Beschichtung oder Lackierung (53), umfassen, der auf einer Innenfläche des dielektrischen Abdeckungswandmaterials (54, 91) und des dielektrischen Basiswandmaterials (59, 92) ausgebildet ist, oder
b) ein elektrisch leitfähiges Einsatzstück (80), das zwischen der Abdeckung (31, 50, 90, 130) und der Basis (32, 55, 95, 135) angeordnet ist.

5. Verbindervorrichtung (30, 600, 900) nach Anspruch 4, wobei die Kontaktierungsmittel (53, 80) den elektrisch leitfähigen Einsatz oder eine Hülse (80) umfassen, die zum Aufnehmen eines Endabschnitts des mindestens einen elektrischen Kabels (20, 33, 33', 44, 61, 62), insbesondere eines Kontakts (37a, 37b, 61g, 62g), der an dem Endabschnitt ausgebildet ist, ausgebildet ist.

6. Verbindervorrichtung (30, 600, 900) nach einem der vorhergehenden Ansprüche, wobei das Gehäuse einen ersten Abschnitt (31a, 32a, 51a, 56a) zum Aufnehmen eines ersten elektrischen Kabels (20, 33, 33', 44, 61, 62) und einen zweiten, vom ersten Abschnitt verschiedenen Abschnitt (31a, 32a, 51a, 56a) zum Aufnehmen eines zweiten elektrischen Kabels (20, 33, 33', 44, 61, 62), das sich von dem ersten elektrischen Kabel (20, 33, 33', 44, 61, 62) unterscheidet, umfasst.

7. Verbindervorrichtung (30, 600, 900) nach einem der vorhergehenden Ansprüche, wobei die Abdeckung (31, 50, 90, 130) einen elektrisch leitfähigen Abdeckungsabschnitt umfasst, der über oder in dem dielektrischen Abdeckungswandmaterial (54, 91) ausgebildet ist und ausschließlich zur Außenseite der Abdeckung (31, 50, 90, 130) weist; und
die Basis (32, 55, 95, 135) einen elektrisch leitfähigen Basisabschnitt umfasst, der über oder in dem dielektrischen Basiswandmaterial (59, 92) ausgebildet ist und ausschließlich zur Außenseite der Basis (32, 55, 95, 135) weist.

8. System, umfassend die Verbindervorrichtung (30, 600, 900) nach einem der vorhergehenden Ansprüche und einen Endabschnitt eines elektrischen Kabels (20, 33, 33', 44, 61, 62), der einen leitfähigen Abschnitt in elektrischem Kontakt mit den Kontaktierungsmitteln (53, 80) des Gehäuses der Verbindervorrichtung (30, 600, 900) in einem geschlossenen Zustand des Gehäuses umfasst.

9. System nach Anspruch 8, wobei der leitfähige Abschnitt mindestens einen von einem Innenleiter (21, 61a, 62a), einem elektrisch leitfähigen Mantel (22, 36a, 36b, 61b, 62b), der einen Innenleiter (21, 61a, 62a) umgibt, und einem Kontakt (37a, 37b, 61g, 62g), der an einem Spitzen- oder einem Innenleiter (21, 61a, 62a) angeordnet ist, umfasst.

10. System nach Anspruch 8 oder 9 in Kombination mit Anspruch 7, wobei das elektrische Kabel (20, 33, 33', 44, 61, 62) ein elektrisch leitfähiges Geflecht (25, 1030, 61e, 62e) umfasst, das über einem Innenleiter (21, 61a, 62a) des elektrischen Kabels (20, 33, 33', 44, 61, 62) ausgebildet ist und elektrisch mit dem elektrisch leitfähigen Abdeckungsabschnitt (31b) und dem elektrisch leitfähigen Basisabschnitt in einem geschlossenen Zustand des Gehäuses verbunden ist.

11. System nach Anspruch 10, wobei das elektrisch leitfähige Geflecht (25, 1030, 61e, 62e) eine Kerbe oder einen Flansch (38an, 38bn) aufweist und das Gehäuse einen Abschnitt (31a, 32a, 51a, 56a, 51b, 56b) zum Aufnehmen des Kabels umfasst, wobei der Abschnitt (31a, 32a, 51a, 56a, 51b, 56b) eine Aufnahme zum Aufnehmen der Kerbe oder des Flansches (38an, 38bn) des elektrisch leitfähigen Geflechts (25, 1030, 61e, 62e) umfasst.

12. Verfahren zum Verbinden eines elektrischen Kabels (20, 33, 33', 44, 61, 62) mit einer Verbindervorrichtung (30, 600, 900) nach einem der Ansprüche 1 bis 7, umfassend die Schritte:
Bereitstellen einer Abdeckung (31, 50, 90, 130) eines Gehäuses der Verbindervorrichtung (30, 600, 900) und einer Basis (32, 55, 95, 135) des Gehäuses der Verbindervorrichtung (30, 600, 900), wobei die Abdeckung (31, 50, 90, 130) ein dielektrisches Abdeckungswandmaterial (54, 91) umfasst, die Basis (32, 55, 95, 135) ein dielektrisches Basiswandmaterial (59, 92) umfasst und das Gehäuse Kontaktierungsmittel (53, 80) zum elektrischen Kontaktieren eines elektrisch leitfähigen Abschnitts des mindestens einen elektrischen Kabels (20, 33, 33', 44, 61, 62) umfasst;
Einführen des elektrischen Kabels (20, 33, 33', 44, 61, 62) zwischen die Abdeckung (31, 50, 90, 130) und die Basis (32, 55, 95, 135);
Schließen des Gehäuses durch Aufeinanderzubewegen der Abdeckung (31, 50, 90, 130) und der Basis (32, 55, 95, 135) derart, dass im geschlossenen Zustand das Gehäuse im Wesentlichen gasfrei ist zwischen a) dem elektrisch leitfähigen Abschnitt des mindestens einen elektrischen Kabels (20, 33, 33', 44, 61, 62) und dem dielektrischen Abdeckungswandmaterial (54, 91), b) dem elektrisch leitfähigen Abschnitt des mindestens einen elektrischen Kabels (20, 33, 33', 44, 61, 62) und dem dielektrischen Basiswandmaterial (59, 92), c) den Kontaktierungsmitteln (53, 80) und dem dielektrischen Abdeckungswandmaterial (54, 91), und d) den Kontaktierungsmitteln (53, 80) und dem dielektrischen Basiswandmaterial (59, 92); und
elektrisches Kontaktieren des elektrisch leitfähigen Abschnitts und der Kontaktierungsmittel (53, 80) miteinander durch das Schließen des Gehäuses.

## Revendications

1. Dispositif de connecteur (30, 600, 900) destiné à connecter au moins un câble électrique (20, 33, 33', 44, 61, 62) et comprenant un boîtier, le boîtier comprenant
un couvercle (31, 50, 90, 130) comprenant un matériau diélectrique de paroi de couvercle (54, 91) et une base (32, 55, 95, 135) comprenant un matériau diélectrique de paroi de base (59, 92), le couvercle (31, 50, 90, 130) et la base (32, 55, 95, 135) étant configurés pour être assemblés l'un à l'autre dans un état fermé du boîtier et pour recevoir une partie d'extrémité de l'au moins un câble électrique (20, 33, 33', 44, 61, 62) comprenant une partie électriquement conductrice ;
et des moyens de contact (53, 80) pour mettre en contact électriquement la partie électriquement conductrice de l'au moins un câble électrique (20, 33, 33', 44, 61, 62), dans l'état fermé du boîtier,
et dans lequel le couvercle (31, 50, 90, 130) et la base (32, 55, 95, 135) sont configurés de telle sorte que, dans l'état fermé du boîtier, le boîtier est sensiblement exempt de gaz entre
a) la partie électriquement conductrice de l'au moins un câble électrique (20, 33, 33', 44, 61, 62) et le matériau diélectrique de paroi de couvercle (54, 91),
b) la partie électriquement conductrice de l'au moins un câble électrique (20, 33, 33', 44, 61, 62) et le matériau diélectrique de paroi de base (59, 92),
c) les moyens de contact (53, 80) et le matériau diélectrique de paroi de couvercle (54, 91), et
d) les moyens de contact (53, 80) et le matériau diélectrique de paroi de base (59, 92),
dans lequel le boîtier comprend en outre des réservoirs d'un matériau de graisse diélectrique prévus dans le boîtier et agencés de telle sorte que, dans l'état fermé du boîtier, le matériau de graisse diélectrique est éteint dans des cavités d'air formées pour atteindre l'état fermé du boîtier entre des parties électriquement conductrices de l'au moins un câble électrique (20, 33, 33', 44, 61, 62) et le matériau diélectrique de paroi de couvercle (54, 91) et/ou entre les parties électriquement conductrices de l'au moins un câble électrique (20, 33, 33', 44, 61, 62) et le matériau diélectrique de paroi de base (59, 92),
dans lequel le couvercle (31, 50, 90, 130) comprend des premiers éléments en forme de doigt (52, 131) et la base (32, 55, 95, 135) comprend des seconds éléments en forme de doigt (57, 136) agencés de telle sorte que, dans l'état fermé du boîtier, les premiers et seconds éléments en forme de doigt (57, 136) s'engagent les uns avec les autres, et
dans lequel les réservoirs du matériau de graisse diélectrique sont agencés au moins entre certains des premiers éléments en forme de doigt (52, 131) et/ou certains des seconds éléments en forme de doigt (57, 136), et les premiers éléments en forme de doigt (52, 131) et les seconds éléments en forme de doigt (57, 136) sont agencés de telle sorte que, dans l'état fermé du boîtier, au moins certains des premiers éléments en forme de doigt (52, 131) et/ou des seconds éléments en forme de doigt (57, 136) éteignent la graisse diélectrique dans les cavités d'air.

2. Dispositif de connecteur (30, 600, 900) selon la revendication 1, dans lequel les moyens de contact (53, 80) sont configurés pour venir en prise avec un contact (37a, 37b, 61g, 62g) de l'au moins un câble électrique (20, 33, 33', 44, 61, 62).

3. Dispositif de connecteur (30, 600, 900) selon la revendication 1 ou 2, dans lequel les moyens de contact (53, 80) sont configurés pour mettre en contact électriquement, dans l'état fermé du boîtier, une gaine électriquement conductrice (22, 36a, 36b, 61b, 62b) de l'au moins un câble électrique (20, 33, 33', 44, 61, 62), entourant un conducteur interne (21, 61a, 62a) de l'au moins un câble électrique (20, 33, 33', 44, 61, 62) ; et
dans lequel le couvercle (31, 50, 90, 130) et la base (32, 55, 95, 135) sont configurés de telle sorte que, dans l'état fermé du boîtier, le boîtier est sensiblement exempt de gaz entre la gaine électriquement conductrice (22, 36a, 36b, 61b, 62b) de l'au moins un câble électrique (20, 33, 33', 44, 61, 62) et le matériau diélectrique de paroi de couvercle (54, 91), et entre la gaine électriquement conductrice (22, 36a, 36b, 61b, 62b) de l'au moins un câble électrique (20, 33, 33', 44, 61, 62) et le matériau diélectrique de paroi de base (59, 92).

4. Dispositif de connecteur (30, 600, 900) selon l'une des revendications précédentes, dans lequel les moyens de contact (53, 80) comprennent une zone électriquement conductrice, par exemple un revêtement ou une peinture électriquement conducteur (53), formée sur une surface interne du matériau diélectrique de paroi de couvercle (54, 91) et du matériau diélectrique de paroi de base (59, 92), ou
b) un insert électriquement conducteur (80) agencé entre le couvercle (31, 50, 90, 130) et la base (32, 55, 95, 135).

5. Dispositif de connecteur (30, 600, 900) selon la revendication 4, dans lequel les moyens de contact (53, 80) comprennent l'insert électriquement conducteur ou un manchon (80) configuré pour recevoir une partie d'extrémité de l'au moins un câble électrique (20, 33, 33', 44, 61, 62), en particulier un contact (37a, 37b, 61g, 62g) formé au niveau de la partie d'extrémité.

6. Dispositif de connecteur (30, 600, 900) selon l'une des revendications précédentes, dans lequel le boîtier comprend une première partie (31a, 32a, 51a, 56a) destinée à recevoir un premier câble électrique (20, 33, 33', 44, 61, 62) et une seconde partie (31a, 32a, 51a, 56a), différente de la première partie, destinée à recevoir un second câble électrique (20, 33, 33', 44, 61, 62), différent du premier câble électrique (20, 33, 33', 44, 61, 62).

7. Dispositif de connecteur (30, 600, 900) selon l'une des revendications précédentes, dans lequel le couvercle (31, 50, 90, 130) comprend une partie de couvercle électriquement conductrice formée sur ou dans le matériau diélectrique de paroi de couvercle (54, 91), faisant face exclusivement à l'extérieur du couvercle (31, 50, 90, 130) ; et
la base (32, 55, 95, 135) comprend une partie de base électriquement conductrice formée sur ou dans le matériau diélectrique de paroi de base (59, 92), faisant face exclusivement à l'extérieur de la base (32, 55, 95, 135).

8. Système comprenant le dispositif de connecteur (30, 600, 900) selon l'une des revendications précédentes et une partie d'extrémité d'un câble électrique (20, 33, 33', 44, 61, 62) comprenant une partie conductrice en contact électrique avec les moyens de contact (53, 80) du boîtier du dispositif de connecteur (30, 600, 900) dans un état fermé du boîtier.

9. Système selon la revendication 8, dans lequel la partie conductrice comprend au moins l'un parmi un conducteur interne (21, 61a, 62a), une gaine électriquement conductrice (22, 36a, 36b, 61b, 62b) entourant un conducteur interne (21, 61a, 62a), et un contact (37a, 37b, 61g, 62g) agencé sur une pointe ou un conducteur interne (21, 61a, 62a).

10. Système selon la revendication 8 ou 9 en combinaison avec la revendication 7, dans lequel le câble électrique (20, 33, 33', 44, 61, 62) comprend une tresse électriquement conductrice (25, 1030, 61e, 62e) formée sur un conducteur interne (21, 61a, 62a) du câble électrique (20, 33, 33', 44, 61, 62) et connectée électriquement à la partie de couvercle électriquement conductrice (31b) et à la partie de base électriquement conductrice dans un état fermé du boîtier.

11. Système selon la revendication 10, dans lequel la tresse électriquement conductrice (25, 1030, 61e, 62e) présente une encoche ou une bride (38an, 38bn) et le boîtier comprend une partie (31a, 32a, 51a, 56a, 51b, 56b) destinée à recevoir le câble, dans lequel la partie (31a, 32a, 51a, 56a, 51b, 56b) comprend un logement destiné à recevoir l'encoche ou la bride (38an, 38bn) de la tresse électriquement conductrice (25, 1030, 61e, 62e).

12. Procédé de connexion d'un câble électrique (20, 33, 33', 44, 61, 62) à un dispositif de connecteur (30, 600, 900) selon l'une des revendications 1 à 7, comprenant les étapes consistant à :
fournir un couvercle (31, 50, 90, 130) d'un boîtier du dispositif de connecteur (30, 600, 900) et une base (32, 55, 95, 135) du boîtier du dispositif de connecteur (30, 600, 900), le couvercle (31, 50, 90, 130) comprenant un matériau diélectrique de paroi de couvercle (54, 91), la base (32, 55, 95, 135) comprenant un matériau diélectrique de paroi de base (59, 92), et le boîtier comprenant des moyens de contact (53, 80) pour mettre en contact électriquement une partie électriquement conductrice de l'au moins un câble électrique (20, 33, 33', 44, 61, 62) ;
insérer le câble électrique (20, 33, 33', 44, 61, 62) entre le couvercle (31, 50, 90, 130) et la base (32, 55, 95, 135) ;
fermer le boîtier en poussant le couvercle (31, 50, 90, 130) et la base (32, 55, 95, 135) l'un vers l'autre de telle sorte que, dans l'état fermé, le boîtier soit sensiblement exempt de gaz entre a) la partie électriquement conductrice de l'au moins un câble électrique (20, 33, 33', 44, 61, 62) et le matériau diélectrique de paroi de couvercle (54, 91), b) la partie électriquement conductrice de l'au moins un câble électrique (20, 33, 33', 44, 61, 62) et le matériau diélectrique de paroi de base (59, 92), c) les moyens de contact (53, 80) et le matériau diélectrique de paroi de couvercle (54, 91), et d) les moyens de contact (53, 80) et le matériau diélectrique de paroi de base (59, 92) ; et
mettre électriquement en contact l'un avec l'autre la partie électriquement conductrice et les moyens de contact (53, 80) par la fermeture du boîtier.
